# EUROPÄISCHE PATENTSCHRIFT

(11) **EP 3 701 180 B1**
(45) Veröffentlichungstag und Bekanntmachung des Hinweises auf die Patenterteilung: **25.08.2021**
(21) Anmeldenummer: 18788786.4
(22) Anmeldetag: 24.10.2018
(51) Int. Cl.: F16L 9/147, B29C 63/34, F16L 58/10

(54) **VERFAHREN ZUR HERSTELLUNG EINES MIT EINEM INLINER AUSGEKLEIDETEN ROHRES**
METHOD FOR MANUFACTURING A TUBE CLAD WITH AN INNER LINER
PROCÉDÉ DE FABRICATION D'UN TUBE REVÊTU D'UNE GAINE INTÉRIEURE

(30) Priorität: 25.10.2017 EP 17198320
(43) Veröffentlichungstag der Anmeldung: 02.09.2020
(73) Patentinhaber: Evonik Operations GmbH, 45128 Essen (DE)
(72) Erfinder: GOSI DE AQUINO, Fábio, 40211 Düsseldorf (DE); HARTMANN, Markus, 48324 Sendenhorst (DE); DEMICOLI, Daniel, 45133 Essen (DE); GÖRING, Rainer, 46325 Borken (DE); VAN LAAK, Hermann, 46569 Hünxe (DE); BEYER, Horst, 45770 Marl (DE); DE GANS LI, Lan, 45478 Mülheim an der Ruhr (DE)
(74) Vertreter: Evonik Patent Association
(86) Internationale Anmeldenummer: PCT/EP2018/079144
(87) Internationale Veröffentlichungsnummer: WO 2019/081572

(56) Entgegenhaltungen:
- EP-A1- 2 558 273
- EP-A1- 2 783 835
- DE-A1- 3 023 214

## Beschreibung

Die Erfindung betrifft ein Verfahren zur Herstellung eines Rohres, dessen innere Oberfläche mit einer thermoplastischen Schicht ausgekleidet ist. Sie betrifft auch das so hergestellte Rohr, dessen Verwendung zur Herstellung einer verlegten Rohrleitung sowie die so hergestellte Rohrleitung. Bei der Rohrleitung handelt es sich insbesondere um eine Leitung aus Metall, die zum Transport von Abwasser, Gas, Öl, Rohöl, Raffinerieprodukten, Wasser-Öl-Gemischen, Sand-Wasser-Öl-Gemischen, Aufschlämmungen im Bergbau oder ähnlichen Medien, zur Stützung und Auskleidung einer Öl- oder Gasförderbohrung oder als Bohrgestänge bei der Bohrlocherstellung in Öl- oder Gasfeldern dient.

Abwasser-, Öl- oder Gasleitungen oder Leitungen, die ähnliche Medien transportieren, haben eine begrenzte Standzeit. Der Grund hierfür sind einerseits fortschreitende Korrosionsschäden, andererseits andauernde mechanische Belastungen, wie sie durch den Transport von abrasiven Medien auftreten. Die in Frage kommenden Leitungen liegen in der Regel rund 1 m tief oder mehr im Erdreich oder unter dem Wasser in Meeren und Seen, so dass ein Auswechseln der Leitungen nur mit erheblichem Aufwand möglich wäre. Metallische Leitungen werden häufig auch zur Stabilisierung und Auskleidung von Bohrlöchern in Öl- und Gasfeldern eingesetzt. Diese, in der Fachwelt Casings genannten, Leitungen sind ebenfalls sehr korrosiven, mitunter auch abrasiven Bedingungen ausgesetzt. Des Weiteren werden metallische Rohrleitungen häufig auch als Bohrgestänge bei der Erstellung von Bohrlöchern im Erdreich verwendet. Diese Bohrungen dienen der Erschließung von Ölquellen, Gasquellen oder auch Wasserquellen. Das Bohrgestänge führt den Bohrkopf während der Bohrung in das Erdreich. Das Gestänge ist dabei häufig ein Rohr, durch dessen Querschnitt Prozessmedien, aber auch erste Fördermedien fließen können. Auch diese Leitungen sind hoch korrosiven und mitunter abrasiven Medien ausgesetzt. Es besteht daher ein Bedarf an korrosions- und abrasionsbeständigen Leitungen.

Die in Frage kommenden Leitungen werden häufig ab Werk oder zum Beispiel auf sogenannten Spool Bases mit einem Liner ausgestattet. Dieser dient unter anderem der Vorbeugung gegen Korrosionsschäden. Ölförderleitungen werden zum Beispiel vor der Einbringung in das Meer auf sogenannten Spool Bases auf dem Festland zusammengefügt und mit einem Liner ausgestattet. Des Weiteren werden beispielsweise Leitungen für Casings von Bohrlöchern schon ab Werk mit einem Liner versehen und anschließend in das Bohrloch eingebracht.

Geeignete Verfahren zum Einbringen eines Inliners mit Übermaß in ein Rohr oder eine Rohrleitung sind beispielsweise in folgenden Patentanmeldungen beschrieben: EP 0 562 706 A2,
EP 0 619 451 A1, WO 95/27168, WO 98/02293, WO 01/16520, WO 2007/023253, EP 0 377 486 A2, EP 0 450 975 A2, EP 0 514 142 A2 und WO 96/37725.

Der Außendurchmesser des Rohrinliners wird dabei etwas größer als der des auszukleidenden Rohres ausgelegt. Um den Inliner einzubringen, wird dieser dann in seinem Querschnitt durch Verstrecken, Stauchen oder Falten reduziert. Nach dem Einbringen des Inliners legt sich dieser durch Rückstellung an die Rohrinnenwandung an. Dieser Vorgang kann durch Druck- und Temperaturbeaufschlagung unterstützt werden. Das so ausgekleidete Rohr weist keinen Ringraum auf. Bedingt durch Unregelmäßigkeiten der inneren Rohr- oder Leitungsoberfläche, die beispielsweise durch Oberflächenrauhigkeit, aber auch durch Schweißnähte gegeben sein können, verbleiben allerdings Mikrovolumina.

Ein geeignetes Einbringungsverfahren ist beispielsweise das Swagelining™. Nachdem hier Inlinerrohre zu einer Sektion stumpfverschweißt wurden, die etwas länger ist als der zu sanierende Abschnitt des Trägerrohrs, wird diese durch ein Gesenk gezogen, das den Rohrdurchmesser temporär reduziert. Damit wird das Einziehen des Inliners in den kleineren Rohrinnenraum des Trägerrohrs ermöglicht. Nach dem vollständigen Einziehen des Inliners in die Leitung wird die Zugkraft entlastet. Aufgrund des Rückstellverhaltens des thermoplastischen Werkstoffs strebt der Inliner wieder zu seinem Ausgangsdurchmesser zurück, bis er fest an der Innenwand der Leitung anliegt. Daraus resultiert eine hohe Wandreibung zwischen Inliner und Leitung, die zu einer Lagestabilisierung des Inliners führt und beispielsweise eine durch Medienquellung oder Wärmeeinfluss induzierte Längsausdehnung über die Ausdehnung der Leitung hinaus verhindert. Zudem liegt der Inliner so dicht an der Rohrinnenfläche an, dass daraus ein sehr geringes Volumen im Ringraum resultiert.

Ein weiteres geeignetes Einbringungsverfahren ist das Rolldown®-Verfahren. Auch hier werden zunächst Inlinerrohre vor Ort im Stumpfschweißverfahren verbunden. Um einen Einzug zu ermöglichen, wird der Querschnitt des Inliners in der Rolldown-Maschine mit Hilfe paarweise angeordneter Rollen verringert. Die Geschwindigkeit der Verformung beträgt typischerweise ein bis drei Meter pro Minute. Nach dem Einzug werden die Rohrenden verschlossen und der Inliner wird mit Wasserdruck beaufschlagt. Dadurch dehnt er sich wieder auf seinen ursprünglichen Durchmesser aus und legt sich dicht an die Rohrinnenwand an. Gegenüber dem Swagelining sind hier beim Einziehen des Inliners geringere Zugkräfte erforderlich, was zu einer geringeren Materialbelastung führt und höhere Einzugsgeschwindigkeiten ermöglicht.

Der Inliner kann nach diesen Methoden auch bereits werksseitig eingebracht werden.

Das Falten ist beispielsweise in der EP 0 377 486 A2 beschrieben.

Die WO 2011/042732 beschreibt ein weiteres Verfahren zum Einbringen von Inlinern mit größerem oder gleichem Durchmesser als die Trägerleitung. Dort wird erläutert, wie ein Inliner in kurze

Rohrabschnitte eingebracht werden kann. Dabei wird der Inliner durch ein Gesenk in das Trägerrohr geschoben.

Die oben beschriebenen Einbringverfahren sind geeignet, um Leitungen, die zum Transport von Fernwärme, Frischwasser, Abwasser, Gas, Öl, Rohöl oder ähnlichen Medien, zur Stützung und Auskleidung von Öl- und Gasförderbohrungen oder als Bohrgestänge bei der Bohrlocherstellung in Öl- und Gasfeldern dienen, mit Linern aus thermoplastischen Werkstoffen auszukleiden.

Nachteilig bei allen beschriebenen Verfahren ist, dass gasförmige Medien durch den Inliner permeieren können. Die zwischen dem Inliner und der Trägerleitung befindlichen Hohlräume und/oder Mikrohohlräume werden dadurch mit Gas gefüllt. Der Gasdruck nimmt im Gleichgewicht den Partialdruck des Gases im Fördermedium an. Bei Druckschwankungen in der Leitung kann sich das im Ringraum befindliche Gas ausdehnen; im schlimmsten Fall kann das Gas dabei ein Volumen einnehmen, das zum radialen Zusammenfalten des Liners führen kann. Dieses Zusammenfalten führt zu einem Verschließen des Trägerrohrquerschnitts und im schlimmsten Fall dazu, dass kein Medium mehr durchgeleitet werden kann. Dieses, dem Fachmann als Kollabieren bekannte Versagen, ist das dominierende Versagensmuster von Inlinern. Besonders kritisch ist dieses Phänomen bei der Förderung bzw. dem Transport von Rohöl oder Erdgas oder beim Transport von überkritischem CO₂, vor allem unter Bedingungen, bei denen mit relativ schnellen Druckänderungen gerechnet werden muss. Derartige Druckänderungen sind in der Öl- und Gasindustrie unter dem Begriff "Rapid Gas Decompression" (RGD) ein bekanntes Phänomen.

So muss beispielsweise bei der tertiären Erdölförderung mit solchen Druckänderungen umgegangen werden. Tertiäre Ölfördermethoden verwenden überkritisches CO₂ als Lösemittel für Restöl, wobei dessen Viskosität verringert und die Extraktion aus den ölführenden Schichten erleichtert wird. Für CO₂ liegt die kritische Temperatur bei 31 °C und der kritische Druck bei 73,8 bar. In der Praxis werden deutlich höhere Drücke verwendet, da die Lösefähigkeit von überkritischem CO₂ mit dem Druck ansteigt. Typische Drücke liegen im Bereich von 75 bis 220 bar, wobei die Temperatur bis zu 150 °C betragen kann.

Die Rohre, die überkritisches CO₂ transportieren, sind häufig mit einem polymeren Inliner ausgerüstet, um die üblicherweise metallische Struktur vor Korrosion zu schützen. Bei Transportrohren besteht der Liner üblicherweise aus Polyethylen; er kann aber auch beispielsweise aus einem Polyamid oder aus PVDF bestehen.

Schnelle Druckänderungen können auch während des Betriebs von Rohölleitungen sowie von Gasleitungen auftreten, beispielsweise dann, wenn die Leitung zwecks Wartungsarbeiten entspannt wird und dabei eine rasche Druckminderung auftritt. Auch bei einer Notfallabschaltung kann in solchen Förder-, Sammel- oder Transportleitungen eine rasche Druckminderung auftreten. Um ein Ablösen des Inliners vom Metallrohr und damit ein Kollabieren des Inliners zu verhindern, sind Verfahren bekannt, bei denen der Inliner in das Metallrohr eingeklebt wird. So wird beispielsweise in der JP 06322346A beschrieben, dass ein Inliner mit Hilfe eines Schmelzklebers in ein Stahlrohr eingeklebt werden kann. Ein anderer Ansatz wird in der EP 2 783 835 A1 offenbart; hier wird ein Inliner in ein Metallrohr eingeführt und durch Erhitzen des Rohrs von außen durch Anschmelzen mit dem Metall verbunden.
In der EP 2 783 835 A1 wird beschrieben, dass der Inliner auch aus zwei, drei oder mehr Schichten bestehen kann. Hierbei kann die äußere Schicht des Inliners haftungsmodifiziert sein, um eine feste Verklebung mit dem Trägerrohr zu erzielen. So kann beispielsweise die Verklebung eines Inliners aus einem Polyolefin mit dem Trägerrohr dadurch optimiert werden, dass der Inliner aus einer innenliegenden Polyolefinschicht und einer darauf folgenden äußeren Schicht aus einem funktionalisierten Polyolefin besteht. Auch die Haftung eines aus einer Polyamidformmasse bestehenden Inliners kann durch eine derartige Außenschicht aus einem funktionalisierten Polyolefin optimiert werden. In dieser Schrift werden anschließend verschiedene beispielhafte Schichtenfolgen angeführt. Derartige mehrschichtige Kunststoffrohre sind seit vielen Jahren aus dem Bereich der Kraftstoffleitungen für Kraftfahrzeuge bekannt. Allerdings sind die hierfür verfügbaren Extrusionsanlagen für Rohre mit kleinen Durchmessern, das heißt für Durchmesser von deutlich weniger als 50 mm und in der Regel für Durchmesser von 6 bis 12 mm ausgelegt. Für Anwendungen im Öl- und Gasbereich werden jedoch deutlich größere Durchmesser - üblich sind je nach Anwendung Innendurchmesser von 1 bis 10 Zoll (25,4 bis 254 mm) - gefordert. Anlagen, die diese Durchmesser produzieren können, stehen aber meist nur für die Herstellung von einschichtigen Rohren zur Verfügung. Eine Umrüstung vorhandener Mehrschichtanlagen auf große Durchmesser oder eine Umrüstung von vorhandenen Monorohranlagen für mehrschichtige Großrohre ist mit hohem Zeit- und Kostenaufwand verbunden und zum Teil wegen des Platzbedarfs kaum möglich.

Weitere Verfahren zur Herstellung von Rohren sind aus DE 3023214 und EP 2558273 vorbekannt.

Die Aufgabe der Erfindung besteht darin, die geschilderten Nachteile zu vermeiden und ein Verfahren zur Verfügung zu stellen, welches einerseits die guten Eigenschaften der üblicherweise verwendeten Linertechnologien besitzt und das andererseits Hohlräume und Mikrohohlräume eliminiert, so dass die oben beschriebenen Schwierigkeiten nicht mehr auftreten.

Diese Aufgabe wird gelöst durch ein Verfahren zur Herstellung eines Metallrohres, dessen innere Oberfläche mit einer thermoplastischen Schicht ausgekleidet ist, wobei das Verfahren folgende Schritte enthält:
a) Ein Metallrohr wird bereitgestellt; dieses wird im Folgenden auch als Trägerrohr bezeichnet,
b) ein rohrförmiger Inliner aus einem thermoplastischen Werkstoff wird bereitgestellt,
c) auf den rohrförmigen Inliner wird ein Tape stoffschlüssig spiralig aufgebracht, wobei die Region der Kontaktoberfläche des Tapes aus einer Formmasse oder einem Kleber besteht, die fest auf der Oberfläche des Inliners haften, und wobei die Region der gegenüberliegenden Oberfläche des Tapes aus einer Formmasse oder einem Kleber besteht, die fest auf dem Metall des Trägerrohrs haften,
   wobei das Tape unidirektional Verstärkungsfasern enthält;
   wobei das Tape von 3 bis 20 Vol.-% Verstärkungsfasern bezogen auf das Volumen des Tapes enthält;
d) gegebenenfalls wird der Querschnitt des Inliners durch Einwirken einer äußeren Kraft verringert,
e) der Inliner wird in das Trägerrohr eingebracht,
f) mittels Anpressdruck und gegebenenfalls Erhitzen werden Inliner und Trägerrohr fest miteinander verbunden.

Gegenstand der Erfindung sind auch das Rohr gemäß Anspruch 8, die Verwendung dieses Rohrs zur Herstellung einer verlegten Rohrleitung sowie die Rohrleitung gemäß den Ansprüchen 10 bis 14.

Generell sind hierbei zwei Ausführungsformen möglich.

In der ersten Ausführungsform ist der Außendurchmesser des Inliners geringfügig größer als der Innendurchmesser des Rohrs. Die Differenz der beiden Durchmesser ist zumindest ein infinitesimal kleiner Betrag. Typischerweise ist der Außendurchmesser des Inliners maximal 25 % und bevorzugt maximal 20 % größer als der Innendurchmesser des Rohrs. Hier wird im Verfahrensschritt d) der Querschnitt des Inliners in der Regel um 3 bis 30 % und bevorzugt um 5 bis 25 % reduziert. Dies kann beispielsweise durch Verstrecken, Stauchen oder Falten gemäß dem Stand der Technik geschehen.

In der zweiten Ausführungsform entspricht der Außendurchmesser des Inliners dem Innendurchmesser des Rohrs oder er ist geringfügig kleiner, beispielsweise bis maximal 3 %, so dass der Inliner mit geringen Kräften in das Rohr eingebracht werden kann ("close fit design"). Falls erforderlich, kann auch hier vor dem Einbringen des Inliners dessen Querschnitt durch Einwirken einer äußeren Kraft verringert werden; diese kann aber deutlich geringer sein als bei der ersten Ausführungsform. Die jeweiligen Rohrgeometrien werden so gewählt, dass sich der polymere Inliner beim Erhitzen radial thermisch stärker ausdehnt als das Rohr, hierbei in engen Kontakt kommt und der notwendige Anpressdruck erzeugt wird. Letzteres kann durch Anlegen eines Innendrucks, beispielsweise mittels Druckluft, verstärkt werden; auf diese Weise kann auch die geometrische Fixierung beim Verfahrensschritt f) erfolgen. Der polymere Inliner kann aber auch direkt nach dem Extrusionsprozess mit einem Memoryeffekt ausgerüstet werden, der nach der Temperatureinwirkung und dem nachfolgenden Abkühlen zu einem vergrößerten Außendurchmesser führt. Dazu wird der polymere Inliner in einem nachfolgenden Prozessschritt durch eine Düse gezogen und dadurch kalt verformt (in Längsrichtung gestreckt und im Durchmesser reduziert). Diese Verformung wird bei Temperaturen unterhalb T_{g} durchgeführt, sodass bei Erwärmung des Inliners über T_{g} sich die Verstreckung zurückstellt. Dieses Verfahren eignet sich besonders für polymere Werkstoffe, die einen hohen T_{g} besitzen, beispielsweise für Polyarylenetherketone, um eine gute Lagerstabilität dieser so vorbehandelten polymeren Liner zu gewährleisten.

Unter "Rohr" wird hierbei im engeren Sinne ein transportierbarer Abschnitt verstanden; mehrere solcher Rohre werden zu einer Rohrleitung zusammengefügt. Dieses Verfahren ist besonders für Rohrlängen zwischen 1m und 50m geeignet, die anschließend bei der Installation zu längeren Rohrleitungen verbunden werden, beispielsweise mittels Verschraubung, Flanschen, Quetschmuffen, Schweißen etc.

Das Rohr besteht vorzugsweise aus Metall, beispielsweise aus Stahl, Edelstahl, Kupfer, Aluminium, Gusseisen, verzinktem Stahl, cadmiertem Stahl, aluminumbeschichtetem Metall, mit Metalllegierungen wie z. B. GALFAN beschichtetem Stahl oder aus jedem anderen Metall. Besonders bevorzugt besteht die innere Oberfläche des Rohrs aus Stahl, Zink oder einer Legierung mit dem Hauptbestandteil Aluminium, Eisen oder Zink.

Geeignete Materialien für den Inliner sind thermoplastische Formmassen, beispielsweise auf Basis von Polyamiden, Polyolefinen, Fluorpolymeren, Polyarylenetherketonen oder Polyphenylensulfid. Der Ausdruck "auf Basis von" bedeutet hier und im Folgenden generell, dass die Formmasse zu mindestens 50 Gew.-%, bevorzugt zu mindestens 60 Gew.-%, besonders bevorzugt zu mindestens 70 Gew.-%, insbesondere bevorzugt zu mindestens 80 Gew.-% und ganz besonders bevorzugt zu mindestens 85 Gew.-% beziehungsweise zu mindestens 90 Gew.-% aus dem jeweiligen Polymeren besteht.

Das erfindungsgemäß verwendbare Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten. In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Darüber hinaus sind teilaromatische Polyamide gut geeignet, beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als ELASTAMIN®-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt oder können durch Routineversuche ermittelt werden.

In einer möglichen Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Beim Polyolefin handelt es sich beispielsweise um Polyethylen (PE) oder um Polypropylen (PP). Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Das Polyarylenetherketon enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei stellen mindestens 50 %, bevorzugt mindestens 70 % und besonders bevorzugt mindestens 80 % der Gruppen X eine Carbonylgruppe dar, während mindestens 50 %, bevorzugt mindestens 70 % und besonders bevorzugt mindestens 80 % der Gruppen Y aus Sauerstoff bestehen.

In der bevorzugten Ausführungsform bestehen 100 % der Gruppen X aus Carbonylgruppen und 100 % der Gruppen Y aus Sauerstoff. In dieser Ausführungsform kann das Polyarylenetherketon beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

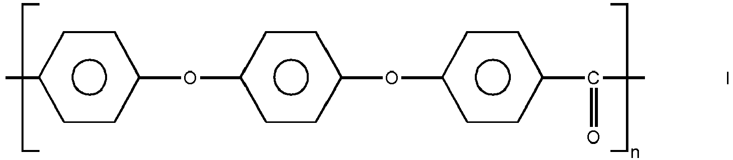

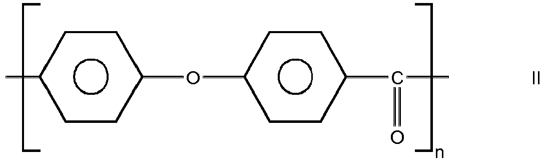

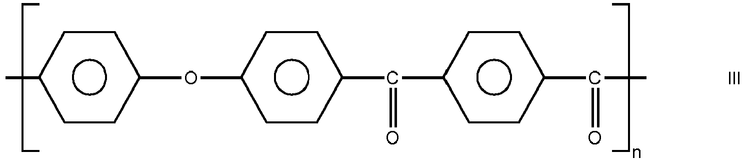

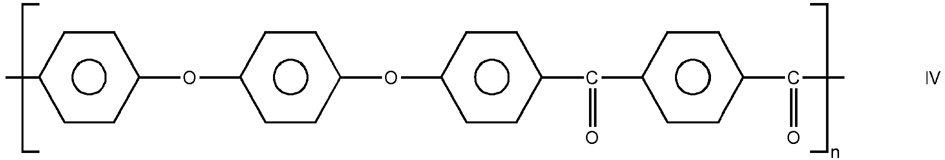

Das Polyarylenetherketon ist teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt.

Das Polyphenylensulfid enthält Einheiten der Formel

(-C₆H₄-S-);

Vorzugsweise besteht es zu mindestens 50 Gew.-%, mindestens 70 Gew.-% bzw. mindestens 90 Gew.-% aus diesen Einheiten. Die restlichen Einheiten können solche sein, wie sie oben im Falle des Polyarylenetherketons angegeben sind, oder tri- oder tetrafunktionelle Verzweigereinheiten, die aus der Mitverwendung beispielsweise von Trichlorbenzol oder Tetrachlorbenzol bei der Synthese resultieren. Polyphenylensulfid ist in einer Vielzahl von Typen bzw. Formmassen handelsüblich.

Die Formmasse kann die üblichen Hilfs- und Zusatzstoffe sowie gegebenenfalls weitere Polymere enthalten, im Falle des Polyarylenetherketons beispielsweise Fluorpolymere wie PFA, Polyimid, Polyetherimid, LCP wie beispielsweise flüssigkristalliner Polyester, Polysulfon, Polyethersulfon, Polyphenylsulfon, Polybenzimidazol (PBI) oder weitere hochtemperaturbeständige Polymere, im Falle des Polyphenylensulfids beispielsweise Copolymere bzw. Terpolymere von Ethylen mit polaren Comonomeren und im Falle des Polyamids einen Schlagzähmodifier. Darüber hinaus können die üblichen Zusätze wie Weichmacher, Pigmente, faserförmige Verstärkungsstoffe, Verarbeitungshilfsmittel und Stabilisatoren enthalten sein. Der Anteil an Polyarylenetherketon, Polyphenylensulfid, Polyamid, Polyolefin oder Fluorpolymer an der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%. Vorzugsweise enthält die Formmasse keine zweite Polymerkomponente, die eine separate Phase ausbildet.
Der Innendurchmesser des Trägerrohrs beträgt in der Regel bis zu 2000 mm, vorzugsweise bis zu 1000 mm und besonders bevorzugt bis zu 500 mm, wobei die Untergrenze des Innendurchmessers 20 mm, vorzugsweise 30 mm und besonders bevorzugt 40 mm beträgt. Die Wanddicke des Inliners liegt hierbei im Bereich von 1 bis 100 mm, vorzugsweise im Bereich von 1,5 bis 80 mm und besonders bevorzugt im Bereich von 2 bis 70 mm.

Der Inliner wird bevorzugt durch Extrusion einer thermoplastischen Formmasse zu endlosen Rohren hergestellt; diese werden dann in passende Abschnitte geschnitten.

Geeignete Materialien für das Tape sind Formmassen vorzugsweise auf Basis von teilkristallinen Polymeren, beispielsweise olefinischen Polymeren, Polyamiden, Fluorpolymeren, Polyarylenetherketonen oder Polyphenylensulfid. Hierbei kann das Tape einschichtig oder auch mehrschichtig sein, beispielsweise zweischichtig, dreischichtig oder vierschichtig. Das Tape kann hierbei auf der Seite zum Inliner hin und/oder auf der Seite zum Metallrohr hin eine Schicht aus einer haftenden Formmasse oder einem Klebstoff enthalten. Die Schicht des Tapes, die zur Verbindung mit dem Trägerrohr vorgesehen ist, sowie gegebenenfalls die Schicht, die zur Verbindung mit dem Inliner vorgesehen ist, kann beispielsweise aus einem Haftklebstoff oder einem vernetzenden Klebstoff bestehen. Für das erfindungsgemäße Verfahren relevante Klebstoffe sind beispielsweise Epoxidharzklebstoffe, Polyurethanklebstoffe, Phenolharzklebstoffe, Polyesterharzklebstoffe (insbesondere solche mit reaktiven Endgruppen wie etwa Isocyanatendgruppen), Polyamidschmelzkleber, Cyanacrylatklebstoffe, Polysulfidklebstoffe, lichthärtende Klebstoffe sowie anaerob härtende Klebstoffe. Letztere härten unter Luftabschluss und Metallkatalyse aus und sind daher insbesondere für die Verbindung zwischen äußerer Tapeoberfläche und Trägerrohr zweckmäßig. Um die Handhabung zu erleichtern, kann eine Klebstoffschicht mit einer abziehbaren Schutzfolie abgedeckt sein.

Einige beispielhafte Ausführungsformen des Tapes sollen im Folgenden beschrieben werden.

Im Falle eines Inliners aus einer Polyamidformmasse kann das Tape einschichtig sein. Es besteht dann beispielsweise aus einer Formmasse auf Basis eines maleinsäureanhydridfunktionalisierten Polyethylens oder Polypropylens, eines Polyetheramids oder eines Polyamids, das haftungsmodifizierende Zusätze enthält, wie sie im Paragraph [0033] der EP2783835A1 beschrieben sind.

Das Tape kann hier auch zweischichtig sein. So kann es beispielsweise zusammengesetzt sein aus einer Schicht aus einer Formmasse auf Basis von Polyamid oder funktionalisiertem Polyolefin, die auf der Seite, die zur Verbindung mit dem Polyamid-Inliner vorgesehen ist, eine Schicht aus einem Epoxidharzklebstoff trägt.

Weiterhin kann das Tape hier auch dreischichtig sein. So kann es beispielsweise zusammengesetzt sein aus einer Schicht aus einer Formmasse auf Basis von Polyamid oder funktionalisiertem Polyolefin, die auf beiden Seiten je eine Schicht aus einem Epoxidharzklebstoff trägt oder alternativ hierzu auf der Seite, die zur Verbindung mit dem Polyamid-Inliner vorgesehen ist, eine Schicht aus einem Epoxidharzklebstoff sowie auf der Seite, die zur Verbindung mit dem Metallrohr vorgesehen ist, eine Schicht aus einem anaerob härtenden Klebstoff.

Im Falle eines Inliners aus einer Polyethylen- oder Polypropylenformmasse kann das Tape einschichtig sein. Es besteht dann beispielsweise aus einer Formmasse auf Basis eines maleinsäureanhydridfunktionalisierten Polyethylens oder Polypropylens.

Das Tape kann hier auch zweischichtig sein. So kann es beispielsweise zusammengesetzt sein aus einer Schicht aus einer Formmasse auf Basis von funktionalisiertem Polyethylen oder Polypropylen, die auf der Seite, die zur Verbindung mit dem Metallrohr vorgesehen ist, eine Schicht aus einem Epoxidharzklebstoff oder einem anaerob härtenden Klebstoff trägt.

Weiterhin kann das Tape hier auch dreischichtig sein. So kann es beispielsweise zusammengesetzt sein aus einer Schicht aus einer Formmasse auf Basis von funktionalisiertem Polyethylen oder Polypropylen, die auf der Seite, die zur Verbindung mit dem Polyolefin-Inliner vorgesehen ist, eine Schicht aus einem unfunktionalisierten Polyethylen oder Polypropylen sowie auf der Seite, die zur Verbindung mit dem Metallrohr vorgesehen ist, eine Schicht aus einem Epoxidharzklebstoff oder einem anaerob härtenden Klebstoff trägt.

Die Breite des Tapes ist abhängig vom Rohrdurchmesser. Übliche Breiten liegen im Bereich von etwa 20 mm bis etwa 700 mm und bevorzugt im Bereich von etwa 30 mm bis etwa 500 mm. Die Dicke des Tapes ist dadurch eingegrenzt, dass es einerseits ausreichend mechanisch stabil sein muss und andererseits ausreichend flexibel, um sich noch gut wickeln zu lassen. In der Praxis besitzt das Tape daher üblicherweise eine Dicke im Bereich von 0,05 mm bis 3 mm und vorzugsweise im Bereich von 0,1 mm bis 2 mm.

Der Querschnitt des Tapes kann rechteckig sein. Es können sich aber auch an den Seiten Aussparungen befinden, so dass die überlappenden Bereiche ineinandergreifen und eine im Wesentlichen glatte Oberfläche der Wicklung ergeben.

Das Tape wird spiralförmig unter Spannung auf den Inliner gewickelt, damit es durch den Anpressdruck kraftschlüssig mit der Unterlage verbunden ist. Hierbei ist darauf zu achten, dass das Tape auf Stoß gewickelt wird, um die äußere Oberfläche des Inliners weitgehend lückenlos und vorzugsweise praktisch vollständig lückenlos zu bedecken; Überlappungen und Spalten sind nach Möglichkeit zu vermeiden. Der Wickelwinkel spielt grundsätzlich keine Rolle, solange eine faltenfreie Wicklung der Tapelage möglich ist. Das Wickeln erfolgt unter einem Anpressdruck, der durch die Wickelspannung oder durch eine Anpressvorrichtung erzeugt wird.
Um die Zugfestigkeit des Tapes zu erhöhen, enthält eine Tapeschicht oder mehrere Tapeschichten unidirektionale Verstärkungsfasern. Erfindungsgemäß enthält das Tape von 3 bis 20 Vol.-%, bevorzugt von 5 bis 19 Vol.-% und besonders bevorzugt von 10 bis 18 Vol.-% Verstärkungsfasern, bezogen auf das Volumen des Tapes. Eine spezielle Ausführungsform hiervon ist ein Tape aus drei oder mehr Schichten, bei der die Mittelschicht (im Falle eines Dreischichttapes) oder mindestens eine der mittleren Schichten (im Falle eines Tapes aus mehr als drei Schichten) unidirektionale Verstärkungsfasern enthält. In diesem Fall liegt der Fasergehalt bevorzugt im Bereich von 3 bis 40 Vol.-%, mehr bevorzugt von 10 bis 38 Vol.-% und besonders bevorzugt von 20 bis 36 Vol.-% bezogen auf das Volumen der faserverstärkten Tapelage. Die unidirektionalen Verstärkungsfasern sind generell in Axialrichtung des Tapes orientiert. Die Fasern der einen oder mehreren Tapeschichten sind bevorzugt Endlosfasern.
Grundsätzlich sind alle Fasern von ausreichender Länge geeignet, deren Erweichungstemperatur und thermische Beständigkeit oberhalb der Verarbeitungstemperatur der Matrixformmasse von etwa 250 °C liegt; es können anorganische Fasern, Polymerfasern sowie Naturfasern sowie Kombinationen untereinander eingesetzt werden. Beispiele geeigneter Fasern sind Metallfasern, Glasfasern, bevorzugt Glasfasern aus S1-Glas, S2-Glas, Kohlenstofffasern, metallisierte Kohlenstofffasern, Borfasern, keramische Fasern (z. B. aus Al₂O₃ oder SiO₂), Basaltfasern, Siliciumcarbidfasern, Kaliumtitanat-Fasern, Aramidfasern, Fasern aus flüssigkristallinem Polyester, Polyacrylnitrilfasern sowie Fasern aus Polymeren wie Polyimid, Polyetherimid, Polyphenylensulfid, Poly-p- Phenylen Benzobisoxazol (PBO), Polyetherketon, Polyetheretherketon und dergleichen.
Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden. Kommerziell erhältliche Fasern enthalten meist an ihrer Oberfläche eine Schlichte, die funktionelle Gruppen zur Anbindung an eine Polymermatrix zur Verfügung stellt. Für den Zweck der Erfindung kann eine Schlichte hilfreich sein, sie ist aber nicht grundsätzlich erforderlich. Bevorzugt werden Fasern verwendet, die eine Schlichte aufweisen, mehr bevorzugt ist die Schlichte reaktiv gegenüber der Polymermatrix.

Die Verbindung zwischen Inliner und Tape kann entweder alleine durch Druck, gegebenenfalls in Kombination mit einer Vernetzungsreaktion, oder mittels thermischen Verschweißens erzeugt werden. Beim Verschweißen von Inliner und Tape ist es vorzuziehen, dass beide Kontaktflächen angeschmolzen werden. In einer Ausführungsform werden zunächst beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst, etwa mit Hilfe der Wickelspannung oder mittels eines Andruckkörpers, etwa eines Rollers oder einer Backe. Bis zum Erstarren der aufgeschmolzenen Bereiche sollte der Anpressdruck dann gehalten werden. In einer weiteren möglichen Ausführungsform wird das Tape aufgewickelt und dann von außen entweder indirekt oder aber direkt mittels eines beheizbaren Andruckkörpers aufgeschmolzen. Danach wird der Anpressdruck bis zum Erstarren der angeschmolzenen Bereiche aufrechterhalten. Dieses Verfahren kann mit Hilfe einer Wickelstation und einer anschließend folgenden Konsolidierungsstation durchgeführt werden, wie es beispielsweise in der WO 2012/118379 beschrieben ist.

Das Einbringen des Inliners in das Trägerrohr erfolgt auf bekannte Weise, etwa gemäß dem eingangs skizzierten Stand der Technik.

Die Verbindung zwischen Inliner und Trägerrohr kann ebenfalls entweder alleine durch Druck, gegebenenfalls in Kombination mit einer Vernetzungsreaktion, oder mittels thermischen Verschweißens erzeugt werden. Der Druck kann durch die Rückverformung, die thermische Ausdehnung des Inliners oder einen von außen mittels Wasser oder Druckluft aufgebrachten Innendruck erzeugt werden. Beim thermischen Verschweißen wird das Rohr von außen oder von innen aufgeheizt, wobei jedes technisch geeignete Verfahren eingesetzt werden kann. Beispielsweise erhitzt man das Trägerrohr oder den Inliner mittels Heißluft, Heißdampf, elektromagnetische Induktion oder IR-Strahler. Hierbei sollte die eingestellte Temperatur vorzugsweise mindestens 10 K, besonders bevorzugt mindestens 20 K, insbesondere bevorzugt mindestens 30 K und ganz besonders bevorzugt mindestens 40 K oberhalb der Schmelztemperatur des Materials der äußeren Oberfläche des aufgebrachten Tapes liegen. Mit Schmelztemperatur ist der Kristallitschmelzpunkt Tₘ der Formmasse gemeint, bestimmt gemäß ISO 11357 beim 2. Aufheizen, oder der Erweichungspunkt eines nicht kristallinen Materials. Generell empfiehlt es sich, die Temperatur mindestens 10 s, bevorzugt mindestens 20 s, besonders bevorzugt mindestens 30 s und insbesondere bevorzugt mindestens 40 s zu halten.

Wird nun das Rohr auf eine Temperatur oberhalb des Erweichungs- bzw. des Schmelzbereichs des Materials der äußeren Oberfläche des aufgebrachten Tapes erhitzt, so schmilzt die Außenoberfläche des Tapes und der Anpressdruck, der entweder durch die Rückverformung, die thermische Ausdehnung des Inliners oder einen von außen aufgebrachten Innendruck erzeugt wird, führt zu einem Einpressen der Schmelze in die Mikrohohlräume zwischen dem aufgebrachten Tape und dem Rohr. Damit wird der Ringraum eliminiert. Permeierendes Gas kann nicht mehr akkumulieren und somit kann bei Druckschwankungen des geförderten Mediums kein Kollabieren des Inliners mehr auftreten.

Anschließend wird die Temperatur reduziert. Dabei kann das Rohr beispielsweise auf natürliche Weise, bevorzugt durch eine Luftschleuse und besonders bevorzugt durch eine Wasserkühlung abgekühlt werden. Es muss mindestens so weit abgekühlt werden, dass sich die Außenoberfläche des aufgebrachten Tapes wieder verfestigt. Üblicherweise wird auf Umgebungstemperatur abgekühlt.

Nach dem Abkühlen liegt eine bleibende Verkrallung zwischen dem Material des aufgebrachten Tapes und dem Rohrmaterial vor sowie zusätzlich eine Verklebung. Damit werden als weiterer Vorteil auch Relativbewegungen zwischen Inliner und Trägerrohr verhindert.

Aufgrund der hohen mechanischen Festigkeit, der guten Abriebeigenschaften, der guten Kratzfestigkeit sowie der optimalen Dicke des eingebrachten Inliners kann erfindungsgemäß gleichzeitig sowohl ein guter Korrosionsschutz als auch ein guter Abrasionsschutz gewährleistet werden. Die sehr glatte Innenfläche des polymeren Inliners gewährleistet zudem einen sehr geringen Strömungswiderstand, was die benötigte Energie für den Förderprozess (insbesondere die Pumpenleistung) reduziert; gleichzeitig gewährleistet sie eine Reduzierung von Ablagerungen bzw. Verunreinigungen an der Innenwand, beispielsweise von Wachsen, Salzen oder Biobelägen. Gleichzeitig wird durch das erfindungsgemäße Verfahren die Gefahr beseitigt, dass der Inliner bei Druckschwankungen kollabiert. Aus diesem Grund kann die aus den erfindungsgemäßen Rohren hergestellte Rohrleitung besonders vorteilhaft zur Förderung bzw. zum Transport von Rohöl oder Erdgas oder zum Transport von überkritischem CO₂ eingesetzt werden, vor allem unter Bedingungen, bei denen mit relativ schnellen Druckänderungen gerechnet werden muss.

## Patentansprüche

1. Verfahren zur Herstellung eines Metallrohrs, dessen innere Oberfläche mit einer thermoplastischen Schicht ausgekleidet ist, wobei das Verfahren folgende Schritte enthält:
a) Ein Metallrohr wird bereitgestellt;
b) ein rohrförmiger Inliner aus einem thermoplastischen Werkstoff wird bereitgestellt;
c) auf den Inliner wird ein Tape stoffschlüssig spiralig aufgebracht, wobei die Region der Kontaktoberfläche des Tapes aus einer Formmasse oder einem Kleber besteht, die fest auf der Oberfläche des Inliners haften, und wobei die Region der gegenüberliegenden Oberfläche des Tapes aus einer Formmasse oder einem Kleber besteht, die fest auf dem Metall des Rohres haften,
wobei das Tape unidirektional Verstärkungsfasern enthält,
wobei das Tape von 3 bis 20 Vol.-% Verstärkungsfasern bezogen auf das Volumen des Tapes enthält;
d) gegebenenfalls wird der Querschnitt des Inliners durch Einwirken einer äußeren Kraft verringert;
e) der Inliner wird in das Metallrohr eingebracht;
f) mittels Anpressdruck und gegebenenfalls Erhitzen werden Inliner und Metallrohr fest miteinander verbunden.

2. Verfahren gemäß Anspruch 1, **dadurch gekennzeichnet,**
**dass** der Inliner aus einer Formmasse besteht, die zu mindestens 50 Gew.-% aus Polyamid, Polyolefin, Fluorpolymer, Polyarylenetherketon oder Polyphenylensulfid besteht.

3. Verfahren gemäß einem der vorhergehenden Ansprüche, **dadurch gekennzeichnet,**
**dass** das Tape aus ein bis vier Schichten besteht.

4. Verfahren gemäß Anspruch 3, **dadurch gekennzeichnet,**
**dass** mindestens eine Schicht des Tapes aus einer Formmasse besteht, die zu mindestens 50 Gew.-% aus Polyolefin, Polyamid, Fluorpolymer, Polyarylenetherketon oder Polyphenylensulfid besteht.

5. Verfahren gemäß einem der Ansprüche 3 und 4, **dadurch gekennzeichnet,**
**dass** das Tape auf der Seite zum Inliner hin eine Schicht aus einer haftenden Formmasse oder einem Klebstoff enthält.

6. Verfahren gemäß einem der Ansprüche 3 bis 5, **dadurch gekennzeichnet,**
**dass** das Tape auf der Seite zum Metallrohr hin eine Schicht aus einer haftenden Formmasse oder einem Klebstoff enthält.

7. Verfahren gemäß einem der Ansprüche 5 und 6, **dadurch gekennzeichnet,**
**dass** der Klebstoff ausgewählt ist aus der Gruppe Haftklebstoff, Epoxidharzklebstoff, Polyurethanklebstoff, Phenolharzklebstoff, Polyesterharzklebstoff, Polyamidschmelzklebstoff, Cyanacrylatklebstoff, Polysulfidklebstoff, lichthärtender Klebstoff und anaerob härtender Klebstoff.

8. Rohr, hergestellt gemäß einem der vorhergehenden Ansprüche.

9. Verwendung eines Rohrs gemäß Anspruch 8 zur Herstellung einer verlegten Rohrleitung.

10. Rohrleitung, hergestellt unter Verwendung eines Rohrs gemäß Anspruch 8,
**dadurch gekennzeichnet,**
**dass** sie zum Transport von Abwasser, Gas, Öl, Rohöl, Raffinerieprodukten, Wasser-Öl-Gemischen, Sand-Wasser-Öl-Gemischen oder Aufschlämmungen im Bergbau dient.

11. Rohrleitung, hergestellt unter Verwendung eines Rohrs gemäß Anspruch 8, **dadurch gekennzeichnet,**
**dass** sie zur Stützung und Auskleidung einer Öl- oder Gasförderbohrung dient.

12. Rohrleitung , hergestellt unter Verwendung eines Rohrs gemäß Anspruch 8, **dadurch gekennzeichnet,**
**dass** sie als Bohrgestänge bei der Bohrlocherstellung in Öl- oder Gasfeldern dient.

13. Rohrleitung, hergestellt unter Verwendung eines Rohrs gemäß Anspruch 8, **dadurch gekennzeichnet,**
**dass** sie eine Förderleitung, eine Sammelleitung oder eine Transportleitung für Rohöl oder Erdgas ist.

14. Rohrleitung, hergestellt unter Verwendung eines Rohrs gemäß Anspruch 8, **dadurch gekennzeichnet,**
**dass** sie eine Leitung für überkritisches CO₂ ist.

## Claims

1. Process for producing a metal pipe, the inner surface of which is lined with a thermoplastic layer, wherein the process comprises the following steps:
a) a metal pipe is provided,
b) a tubular inliner composed of a thermoplastic material is provided,
c) a tape is cohesively helically bonded to the inliner, wherein the region of the contact surface of the tape consists of a moulding composition or an adhesive which adhere firmly to the surface of the inliner, and wherein the region of the opposing surface of the tape consists of a moulding composition or an adhesive which adhere firmly to the metal of the pipe,
wherein the tape comprises unidirectional reinforcing fibres,
wherein the tape comprises from 3 to 20% by volume of reinforcing fibres based on the volume of the tape,
d) the cross section of the inliner is optionally reduced by exposure to an external force,
e) the inliner is inserted into the metal pipe,
f) by means of contact pressure and optionally heat, the inliner and metal pipe are firmly bonded to each other.

2. Process according to Claim 1, **characterized in that** the inliner consists of a moulding composition consisting to an extent of at least 50% by weight of polyamide, polyolefin, fluoropolymer, polyarylene ether ketone or polyphenylene sulfide.

3. Process according to either of the preceding claims,
**characterized in that**
the tape consists of one to four layers.

4. Process according to Claim 3, **characterized in that** at least one layer of the tape consists of a moulding composition consisting to an extent of at least 50% by weight of polyolefin, polyamide, fluoropolymer, polyarylene ether ketone or polyphenylene sulfide.

5. Process according to either of Claims 3 and 4,
**characterized in that**
the tape on the side facing the inliner comprises a layer composed of an adherent moulding composition or an adhesive.

6. Process according to any of Claims 3 to 5,
**characterized in that**
the tape on the side facing the metal pipe comprises a layer composed of an adherent moulding composition or an adhesive.

7. Process according to either of Claims 5 and 6,
**characterized in that**
the adhesive is selected from the group consisting of pressure-sensitive adhesive, epoxy resin adhesive, polyurethane adhesive, phenol resin adhesive, polyester resin adhesive, polyamide hotmelt adhesive, cyanoacrylate adhesive, polysulfide adhesive, light curing adhesive and anaerobically curing adhesive.

8. Pipe produced according to any of the preceding claims.

9. Use of a pipe according to Claim 8 for producing a routed pipeline.

10. Pipeline produced using a pipe according to Claim 8,
**characterized in that**
in the mining sector it serves the transport of wastewater, gas, oil, crude oil, refined products, water-oil mixtures, sand-water-oil mixtures or slurries.

11. Pipeline produced using a pipe according to Claim 8, **characterized in that**
it serves to reinforce and line an oil or gas production well.

12. Pipeline produced using a pipe according to Claim 8, **characterized in that**
it serves as drilling column during borehole construction in oil or gas fields.

13. Pipeline produced using a pipe according to Claim 8, **characterized in that**
it is a conveying pipe, a collecting pipe or a transportation pipe for crude oil or natural gas.

14. Pipeline produced using a pipe according to Claim 8, **characterized in that**
it is a pipe for supercritical CO₂.

## Revendications

1. Procédé pour la fabrication d'un tube métallique dont la surface interne est revêtue avec une couche thermoplastique, le procédé comportant les étapes suivantes :
a) on fournit un tube métallique ;
b) on fournit une garniture interne tubulaire à base d'un matériau thermoplastique ;
c) on applique en spirale en liaison de matière une bande sur la garniture interne, la région de la surface de contact de la bande étant constituée d'une matière à mouler ou d'une colle qui adhèrent fermement à la surface de la garniture interne, et la région de la surface opposée de la bande étant constituée d'une matière à mouler ou d'une colle qui adhèrent fermement au métal du tube,
la bande contenant des fibres de renfort unidirectionnelles,
la bande contenant de 3 à 20 % en volume de fibres de renfort, par rapport au volume de la bande ;
d) éventuellement on réduit la section transversale de la garniture interne par action d'une force extérieure ;
e) on introduit la garniture interne dans le tube métallique ;
f) on lie solidement l'un à l'autre par pression de serrage et éventuellement chauffage la garniture interne et le tube métallique.

2. Procédé selon la revendication 1, **caractérisé en ce que**
la garniture interne est constituée d'une matière à mouler qui est constituée à raison d'au moins 50 % en poids de polyamide, polyoléfine, polymère fluoré, polyarylène-éthercétone ou poly(sulfure de phénylène).

3. Procédé selon l'une quelconque des revendications précédentes, **caractérisé en ce que**
la bande est constituée de une à quatre couches.

4. Procédé selon la revendication 3, **caractérisé en ce**
**qu'**au moins une couche de la bande est constituée d'une matière à mouler qui est constituée à raison d'au moins 50 % en poids de polyoléfine, polyamide, polymère fluoré, polyarylène-éthercétone ou poly(sulfure de phénylène).

5. Procédé selon l'une quelconque des revendications 3 et 4, **caractérisé en ce que**
la bande comporte sur le côté faisant face à la garniture interne une couche à base d'une matière à mouler adhérente ou d'un adhésif.

6. Procédé selon l'une quelconque des revendications 3 à 5, **caractérisé en ce que**
la bande comporte sur le côté faisant face au tube métallique une couche à base d'une matière à mouler adhérente ou d'un adhésif.

7. Procédé selon l'une quelconque des revendications 5 et 6, **caractérisé en ce que**
l'adhésif est choisi dans le groupe constitué par un autoadhésif, un adhésif à base de résine époxy, un adhésif polyuréthane, un adhésif à base de résine phénolique, un adhésif à base de résine polyester, un adhésif fusible polyamide, un adhésif cyanoacrylate, un adhésif polysulfure, un adhésif durcissant à la lumière et un adhésif durcissant en anaérobie.

8. Tube, fabriqué selon l'une quelconque des revendications précédentes.

9. Utilisation d'un tube selon la revendication 8 pour la fabrication d'une canalisation posée.

10. Canalisation, fabriquée avec utilisation d'un tube selon la revendication 8, **caractérisée en ce qu'**elle sert au transport d'eaux usées, de gaz, d'huile, de pétrole brut, de produits de raffinerie, de mélanges d'eau-huile, de mélanges de sable-eau-huile ou de suspensions dans l'exploitation minière.

11. Canalisation, fabriquée avec utilisation d'un tube selon la revendication 8, **caractérisée en ce qu'**elle sert au soutien et au chemisage d'un puits d'extraction de gaz ou de pétrole.

12. Canalisation, fabriquée avec utilisation d'un tube selon la revendication 8, **caractérisée en ce qu'**elle sert de tiges de forage lors de l'élaboration de puits dans des champs de pétrole ou de gaz.

13. Canalisation, fabriquée avec utilisation d'un tube selon la revendication 8, **caractérisée en ce qu'**elle est une conduite d'extraction, une conduite collectrice ou une conduite de transport pour pétrole brut ou gaz naturel.

14. Canalisation, fabriquée avec utilisation d'un tube selon la revendication 8, **caractérisée en ce qu'**elle est une conduite pour CO₂ supercritique.
